# EUROPEAN PATENT SPECIFICATION

(11) **EP 0 400 223 B1**
(45) Date of publication and mention of the grant of the patent: **19.01.1994**
(21) Application number: 89202010.8
(22) Date of filing: 01.08.1989
(51) Int. Cl.: B01D 35/18, F02M 31/12

(54) **Filter for diesel fuel, provided with self-adjusting heating means**
Filter für Dieselöl mit selbstregelnder Heizungsvorrichtung
Filtre pour gas-oil pourvu d'un système automatique de chauffage

(30) Priority: 30.05.1989 IT 6740989
(43) Date of publication of application: 05.12.1990
(73) Proprietor: GILARDINI DISTRIBUZIONE S.p.A., I-10152 Turin (IT)
(72) Inventor: Drusi, Alberto, I-10122 Turin (IT)
(74) Representative: Robba, Eugenio

(56) References cited:
- EP-A- 0 051 936
- FR-A- 2 594 708
- FR-A- 2 598 749
- US-A- 4 501 255

## Description

The present invention relates to a filter for diesel fuel, provided with self-adjusting heating means.

More particularly, the invention relates to a filter designed to be mounted on Diesel engines of motor vehicles.

From FR-A-2 598 749 there is is known a filter for diesel fuel, provided with a heating element of polymer material having a positive temperature coefficient (PTC) for resistivity and made in the form of a circular crown accommodated in a supporting plate mounted on the head of the filter upstream of the filter element and exposed to the flow of the diesel fuel supplied to the filter. Although with a filter of this type it is possible to avoid solidification of the paraffins on the walls of the filter element at low temperatures and further self-adjustment of the heat emitted by the heating elements as a function of temperature is obtained, the filter is not free of inconveniences or disadvantages of operation.

The construction of the heating element produces concentrated heating at some points instead of a uniform heating of all the diesel fuel, as would be desirable.

It is an object of the present invention to reduce or eliminate the abovementioned disadvantage of the known filter and to provide a heated filter for diesel fuel, which will ensure uniform heating of all the diesel fuel and which at the same time is of a simple construction and consequently of low cost. Accordingly, the invention provides a filter for diesel fuel as defined in claim 1.

Other objects and advantages of the invention will become apparent from the following description of a preferred embodiment of the invention with reference to the accompanying drawings, in which:
Fig. 1 is an elevational view, partly in section, of the filter according to the invention;
Fig. 2 is a top plan view of the filter of Fig. 1;
Fig. 3 is a partly enlarged view of the section, taken along the line III-III of Fig. 2;
Fig. 4 is a plan view of a detail of the filter of the preceding Figures;
Fig. 5 is a plan view of another detail of the filter of the preceding Figures;
Fig. 6 is a side view of the detail of Fig. 5;
Fig. 7 is a view in section taken along the line VII-VII in Fig. 2 and showing a detail of the filter;
Fig. 8 is a bottom plan view of the cover of the filter according to the invention;
Fig. 9 is a view corresponding to that of Fig. 8, but with the details of Figs. 4, 5 and 6 mounted; and
Fig. 10 is a view of another detail of the filter, taken along the line X-X of Fig. 8.

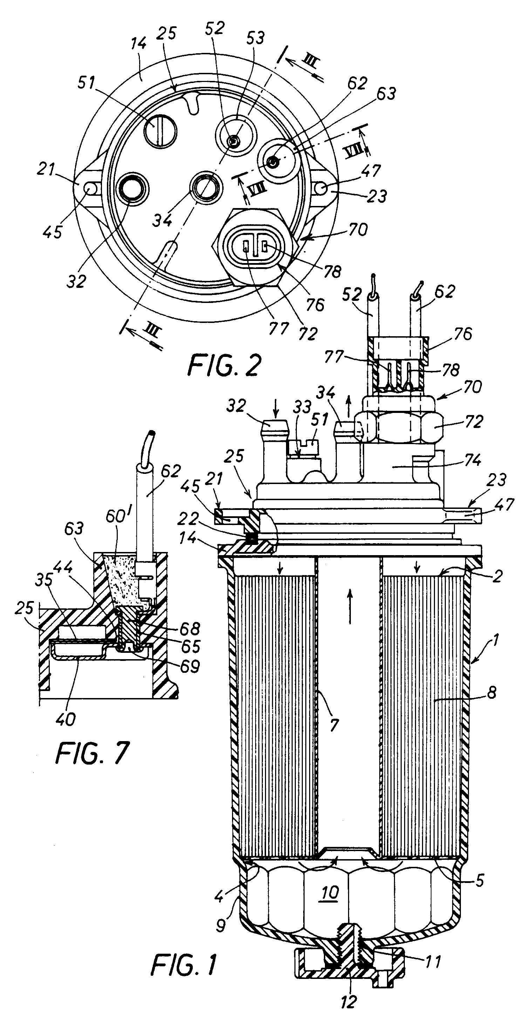

Referring to Figs. 1, 2 and 3, there is shown a filter for diesel fuel of Diesel engines, particularly for motor vehicles, constituted by a cylindrical bowl 1 in which a cylindrical filter cartridge 2 is arranged which is formed by an unperforated central tube 7 on which the filter element 8 of paper is wound. The bowl 1 is advantageously made of plastic material, preferably polyamide with a filler of fibre glass. Its lower part 9 is of reduced diameter so as to support, adjacent the shoulder 4, the perforated bottom 5 of the filter cartridge 2. Thus, below the filter cartridge there is defined a decantation chamber 10 in which the water is collected that may be present in the diesel fuel fed to the filter. Provided in the bottom of the chamber 10 is a drain hole 11 closed by a screw plug 12.

Applied to the bowl 1 is a cover 14 which is likewise made of the same material as the bowl and is irremovably secured thereto, after insertion of the filter cartridge, for example, by vibration welding. The fixed cover 14 is provided with a series of holes 16 located at an intermediate distance between the centre and the periphery, and a threaded central hole 17 defined in a collar 18 facing the bowl 1. An annular gasket 19 is forcedly fitted around that collar to sealingly close the central tube 7 against the filter cartridge. Accommodated on the outer surface of the fixed cover 14 are two sealing O rings 20 and 22, the first one of which is arranged in an intermediate position between the central hole 17 and the holes 16, and the second one arranged outwardly of the holes 16. The sealing rings 20 and 22 are preferably made by co-moulding of the elastomeric material of which they are composed, in appropriate grooves provided in the cover.

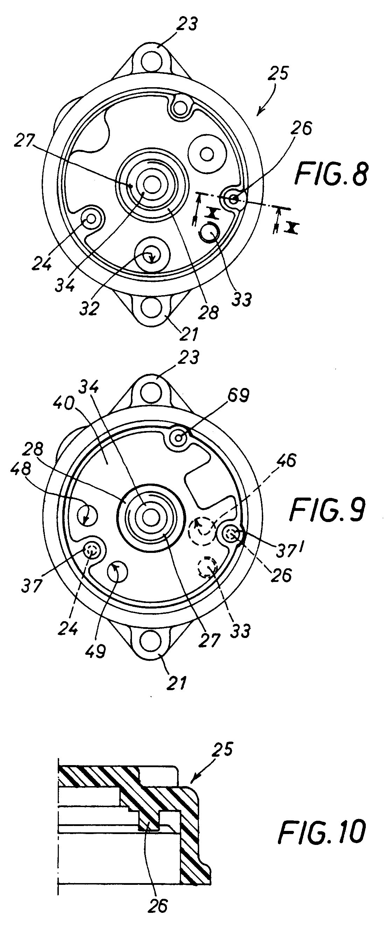

The filter is closed by a removable cover or head indicated generally by 25, the inner part of which is shown in plan view in Figs. 8 and 9. The removable cover 25 is likewise made of moulded plastic material as are the bowl 1 and the fixed cover 14. However, incorporated during moulding in the centre of the cover 25 is a metal connection fitting 27 which is outwardly threaded to permit it to be screwed into the central hole 17 of the fixed cover. Screwing it in is facilitated by the provision of a pair of diametrically opposed lugs 21,23 provided with holes 45, 47 for the application of an appropriate tool. The connection fitting 27 is fixed within a collar 28 formed by moulding with an annular rib 29 within a groove 30 of the connection fitting 27 to permit it to be secured in position.

The collar 28 has a diameter corresponding to that of the sealing O ring 20 while the cover 25 has a diameter corresponding to that of the sealing O ring 22, so that, when the removable cover 25 is screwed down, the two aforementioned sealing rings will ensure sealing against the central hole 17 and against the outside of the filter, respectively.

Formed in the cover 25 are an eccentric duct 32 for the inlet of the diesel fuel to be filtered and a central duct 34 for the outlet of the filtered diesel fuel. These ducts extend vertically towards the outside, as shown in Figs. 1, 2 and 3, or may be shaped in the form of an elbow with a connection terminal in a horizontal position, in a manner not shown, but completely equivalent to the illustrated embodiment. Further, an air bleed hole 33 is provided which has a threaded inner wall closed by a screw 51.

Accommodated in the cover 25 is the self-adjusting heating means for heating the diesel fuel as soon as it reaches the filter from outside.

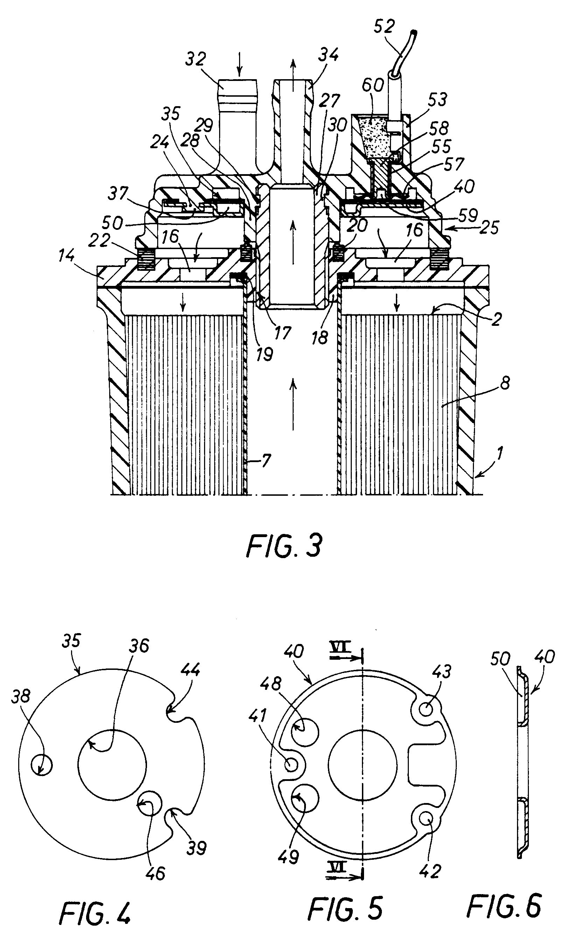

The heating means is shown in plan view in Fig. 4 and is shown in the mounted position in Fig. 3. Fig. 8 shows the interior of the cover 25 the configuration of which is adapted to receive the heating means which is a resistor with a positive coefficient of resistivity (PTC), adapted to provide a greater quantity of heat at low temperatures, when more heat is required for the present application, and a minor quantity of heat as the temperature increases. Such materials are known in the art, but the specific PTC resistor used according to the invention is a polymer material commercialized by RAYCHEM S.p.A., which is suitable for being formed into thin and flexible foils.

The PTC polymer resistor 35 has the form of a circular crown, the central hole 36 of which permits it to be fitted on the collar 28 of the removable cover 25. In this arrangement, the heating element occupies the entire cross section of the cover traversed by the diesel fuel entering the filter.

The heating element 35 is supported by an element 40 secured to the cover 25, but arranged beyond the polymer resistor, i.e. in a position remote from the cover. The element 40 is made of a metal of good conductivity, for example aluminium, has a shape corresponding to that of the element 35, and is provided with three holes 41, 42 and 43 for securing it to the cover. In the mounted condition, the holes 41 and 42 are traversed by pins 24 and 26 (Figs. 3, 9 and 10) projecting inwardly from the cover 25, having the function of locking elements, and designed to be upset by ultrasonic or vibration welding after mounting to obtain the formation of flattened heads 37 and 37' which firmly secure the assembly of the elements 35 and 40 to the cover 25. Instead, the supporting element 40 is traversed by the negative feed contact of the heating element, as will be explained hereinafter.

The heating element 35 is also provided with a hole 38 and two notches 39. 44 in positions corresponding to those of the holes 41,42 and 43 in the supporting element. Thus, the hole 38 and the notch 39 of the heating element 35 are fitted on the pins 24 and 26 while the notch 44 surrounds the negative contact of the heating element. For the passage of the diesel fuel the hole 46 is provided on the heating element and the holes 48, 49 are provided on the supporting element 40.

Referring to Figs. 5 and 6, the supporting element 40 has a cup-shaped configuration the concavity of which defines a space 50 when the supporting element and the heating element 35 are coupled and the diesel fuel passes through this space.

Referring to Figs. 3, 7 and 9, in the mounted condition the elements 35 and 40 are electrically connected as the positive contact is made to engage the heating element 35 while the negative contact is made to engage the supporting element 40, as shown in detail in Fig. 7.

The positive contact (Fig. 3) is established by a conductor 52 which enters the cover through a hole surrounded by a high edge 53 which projects from the cover. The conductor 52 is connected to a cylindrical sleeve 55 with an elastic terminal 57 which is in contact with the upper surface of the PTC resistor 35. The sleeve 55 is secured to the cover 25 by a rivet 58 with a counter-head 59. The hole is sealed by filling the space inwardly of the edge 53 with an appropriate adhesive 60, for example, on the basis of an epoxy resin.

The negative contact is established by a conductor 62 which enters the cover through a hole surrounded by a high edge 63 which projects from the cover. The conductor 62 is connected to a cylindrical sleeve 65 which is inserted in the notch 44 of the heating element and in the hole 43 of the supporting element 40 and is secured in position by a rivet 68 with a counter-head 69, made of the same conductive metal as the supporting element 40 with which electrical connection is established. Also in this case sealing is ensured by using as a sealing material an adhesive 60'.

The two conductors 52, 62 form part of the electric feed circuit, normally of 12 or 24 volts, of the motor vehicle with Diesel engine on which the filter is mounted.

The electric feed circuit of the PTC polymer resistor 35 is controlled by a thermoelectric switch contained in a body 70 (Fig. 1) and provided with a threaded lower part, not shown, which can be screwed by means of the nut-shaped part 72 into a hole of the cover 25 which is provided with a raised collar 74. Thus, the thermoelectric switch faces the inside of the cover of the filter and is subjected to the temperature of the entering diesel fuel. Upwardly it has a seat 76, shown partly in section, to receive the coupling joint of the electric contacts 77,78. Although an embodiment has been shown which has a body 70 extending vertically from the cover 25, an embodiment, not shown, is completely equivalent in which, to diminish the vertical overall dimensions of the assembly, a collar is provided such as the collar 74 formed in an elbow shape and thus the body 70 arranged horizontally.

The operation of the heating element is stopped by the thermostatic switch contained in the body 70 above a predetermined temperature, for example 2°C, when heating is useless as there is no risk of solidification of the paraffins of the diesel fuel and consequently no risk of clogging of the filter. However, at a lower temperature the heating means is switched on and in this range the PTC resistor performs its self-adjusting behaviour with regard to the amount of emitted heat on the basis of the characteristic of increasing the resistance with temperature.

Thus, the diesel fuel entering the filter from the duct 32 at once impinges on the heating means 35 which extends over the entire free cross section of the cover 25. The result is a high efficiency of heat exchange and homogeneous heating of the fuel throughout the mass thereof, as the heater does not have any areas with different temperatures, but a uniform temperature over the entire surface thereof. The diesel fuel then passes through the hole 46 of the heating means and enters the space 50 defined between the heating means 35 and the supporting element 40 where heating continues because of the persisting heat exchange with the lower surface of the resistor 35 and because of the contact with the element 40 which is likewise heated by conduction from the resistor 35. After heating is completed, the diesel fuel leaves the supporting element 40 through the holes 48 and 49 and flows down to the holes 16 of the fixed cover 14 and therethrough towards the filter cartridge 2. The filter cartridge is traversed axially from the top to the bottom as the tube 7 is not perforated and any water or aqueous solution contained in the diesel fuel is separated therefrom in the decantation chamber 10. The latter is periodically drained by opening the hole 11 whereas the purified diesel fuel rises through the tube 7 and flows out through the duct 34.

The screw 51 on the cover permits to periodically bleed the air which may accumulate in the upper part of the filter and which may obstruct the flow of the diesel fuel.

## Claims

1. Filter for diesel fuel, comprising a cylindrical bowl (1) containing a filter cartridge (2) with a cylindrical crown, a fixed cover (14) provided with eccentric holes (16) for the inlet of the diesel fuel and with an axial hole (17) for the outlet thereof, and a removable cover (25) provided with ducts for the inlet (32) and the outlet (34) of the diesel fuel, in which cover there is accommodated a heating means (35) constituted by a single PTC resistor of conductive polymer material having the shape of a circular crown and fed by conductors (52, 62) passing through said removable cover and supported by an element (40) also in the form of a circular crown, remote from said cover (25) and secured thereto, characterized in that said supporting element (40) is a cup-shaped circular crown with the concave portion thereof directed, in the mounted condition, towards the PTC polymer resistor (35) and defining with said PTC resistor a circular conduit (50) and in that the means defining the flow of diesel fuel in the filter are such that, in use, all the diesel fuel flows through said conduit (50).

2. Filter according to claim 1, characterized in that said PCT polymer resistor (35) and said supporting element (40) have a plurality of corresponding apertures (38, 39, 44; 41, 42, 43) in the vicinity of or along the circumference for the passage of means (24, 26, 28) for securing them to said removable cover (25), and holes (46, 48, 49) for the passage of the diesel fuel.

3. Filter according to claim 1 or 2, characterized in that said bowl (1), said fixed cover (14) and said removable cover (25) are made of thermoplastic material and said means for securing the PTC polymer resistor (35) and the supporting element (40) is constituted by pins (24, 26) likewise made of plastic material integrally with said removable cover (25) and projecting to the inside thereof.

4. Filter according to claim 3, characterized in that said pins comprise a head (37) formed, after insertion of the pins, by fusion of the end portion and simultaneous pressure.

5. Filter according to claim 1, characterized in that said bowl (1) and said fixed cover (14) are joined by fusion of the contacting parts.

6. Filter according to claim 2, characterized in that one of said securing means (68) forms part of the electric feed contact of said supporting element (40) and is constituted by a rivet with a counter-head (69) inserted in said hole (43) of the supporting element (40).

7. Filter according to claim 1, wherein said fixed cover (14) accommodates a pair of sealing O rings (20, 22), characterized in that said sealing rings are obtained by moulding elastomeric material within the respective seats of accommodation.

## Patentansprüche

1. Filter für Dieselkraftstoff, umfassend einen zylindrischen der (1), welcher einen Filtereinsatz (2) mit einer zylindrischen Kappe enthält, einen fixen Deckel (14), der mit exzentrischen Löchern (16) zum Eintreten des Dieselkraftstoffs und mit einem axialen Loch (17) zum Austreten desselben versehen ist, und einen entfernbaren Deckel (25), der mit Leitungen für den Eintritt (32) und den Austritt (34) des Dieselkraftstoffs versehen ist, in welchem Deckel eine Heizeinrichtung (35) untergebracht ist, die durch einen einzigen PTC-Widerstand aus einem leitfähigen Polymermaterial in Gestalt eines kreisförmigen Aufsatzes gebildet ist, welcher über durch den entfernbaren Deckel gehende Leiter (52, 62) gespeist ist und von einem ebenfalls in Form eines kreisförmigen Aufbaus gestalteten Element (40) getragen ist, das vom Deckel (25) entfernt an diesem befestigt ist, dadurch gekennzeichnet, daß das Tragelement (40) ein tassenförmiger kreisförmiger Aufsatz ist, dessen konkaver Teil im Montagezustand zum PTC-Polymerwiderstand (35) gerichtet ist und mit dem PTC-Widerstand eine Kreisleitung (50) definiert, und daß die den Dieselkraftstofffluß in den Filter begrenzenden Einrichtungen derart sind, daß beim Betrieb der gesamte Dieselkraftstoff durch die Leitung (50) fließt.

2. Filter nach Anspruch 1, dadurch gekennzeichnet, daß der PTC-Polymerwiderstand (35) und das Tragelement (40) eine Mehrzahl von entsprechenden Öffnungen (38,39,44; 41,42,43) in der Nähe oder entlang des Umfangs für den Durchtritt von Einrichtungen (24, 26, 28) zur Befestigung derselben am entfernbaren Deckel (25) und Löcher (46,48, 49) für den Durchtritt des Dieselkraftstoffs aufweisen.

3. Filter nach Anspruch 1 oder 2, dadurch gekennzeichnet, daß der Becher (1), der fixe Deckel (14) und der entfernbare Deckel (25) aus thermoplastischem Material hergestellt sind und die Einrichtungen der Befestigung des PTC-Polymerwiderstandes (35) und des Tragelements (40) durch Stifte (24,26) gebildet sind, die gleichfalls aus Plastikmaterial integral mit dem entfernbaren Deckel (25) hergestellt sind und von demselben nach innen ragen.

4. Filter nach Anspruch 3, dadurch gekennzeichnet, daß die Stifte einen Kopf (37) aufweisen, der nach Einsetzen der Stifte durch Verschmelzen des Endteils und gleichzeitigen Druck gebildet wird.

5. Filter nach Anspruch 1, dadurch gekennzeichnet daß der Becher (1) und der fixe Deckel (14) durch Verschmelzen der einander berührenden Teile verbunden sind.

6. Filter nach Anspruch 2, dadurch gekennzeichnet, daß eine der Befestigungseinrichtungen (68) Teil des elektrischen Speisekontakts des Tragelements (40) ist und durch eine Niete mit einem Gegenkopf (69) gebildet ist, die im Loch (43) des Tragelements (40) eingesetzt ist.

7. Filter nach Anspruch 1, worin der fixe Deckel (14) ein Paar Runddichtringe (20,22) aufweist dadurch gekennzeichnet daß die Dichtungsringe durch Formen von Elastomermaterial innerhalb der jeweiligen Aufnahmesitze gebildet sind.

## Revendications

1. Filtre pour carburant Diesel, comportant un boîtier cylindrique (1) contenant une cartouche de filtre (2) avec une couronne cylindrique, un couvercle fixe (14) muni de trous excentrés (16) pour l'admission du carburant Diesel et d'un trou axial (17) pour la sortie de celui-ci, et un couvercle amovible (25) muni de conduits pour l'admission (32) et la sortie (34) du carburant Diesel, couvercle dans lequel est loge un moyen de chauffage (35) constitue par une seule résistance à coefficient de température positif en matériau polymère conducteur ayant la forme d'une couronne circulaire et alimentée par des conducteurs (52, 62) traversant ledit couvercle amovible et supportée par un élément (40) également sous la forme d'une couronne circulaire, éloignée dudit couvercle (25) et fixé à celui-ci, caractérisé en ce que ledit élément-support (40) est une couronne circulaire en forme de cuvette avec sa partie concave dirigée, à l'état monté, vers la résistance en polymère à coefficient de température positif (35) et délimitant avec ladite résistance à coefficient de température positif un conduit circulaire (50) et en ce que les moyens définissant l'écoulement du carburant Diesel dans le filtre sont tels qu'en utilisation, la totalité du carburant Diesel circule à travers ledit conduit (50).

2. Filtre selon la revendication 1, caractérisé en ce que ladite résistance en polymère à coefficient de température positif (35) et ledit élément-support (40) possède une pluralité d'ouvertures correspondantes (38, 39, 44 ; 41, 42, 43) à proximité de ou le long de la circonférence pour le passage de moyens (24, 26, 28) afin de les fixer audit couvercle amovible (25), et des trous (46, 48, 49) pour le passage du carburant Diesel.

3. Filtre selon la revendication 1 ou 2, caractérisé en ce que ledit boîtier (1), ledit couvercle fixe (14) et ledit couvercle amovible (25) sont réalisés en matière thermoplastique et lesdits moyens pour fixer la résistance en polymère à coefficient de température positif (35) et l'élément-support (40) sont constitués par des tiges (24, 26) pareillement réalisées en matière plastique faisant corps avec ledit couvercle amovible (25) et faisant saillie vers l'intérieur de celui-ci.

4. Filtre selon la revendication 3, caractérisé en ce que lesdites tiges comportent une tête (37) formée, après introduction des tiges, par fusion de la partie terminale et pression simultanée.

5. Filtre selon la revendication 1, caractérisé en ce que ledit boîtier (1) et ledit couvercle fixe (14) sont réunis par fusion des parties en contact.

6. Filtre selon la revendication 2, caractérisé en ce que l'un desdits moyens de fixation (68) forme une partie du contact d'alimentation électrique dudit élément-support (40) et est constitué par un rivet avec une contre-tête (69) introduite dans ledit trou (43) de l'élément-support (40).

7. Filtre selon la revendication 1, dans lequel ledit couvercle fixe (14) reçoit une paire de joints annulaires d'étanchéité (20, 22), caractérisé en ce que lesdits joints annulaires d'étanchéité sont obtenus par moulage d'un matériau élastomère à l'intérieur des sièges respectifs de logement.
